# EUROPEAN PATENT SPECIFICATION

(11) **EP 4 518 641 B1**
(45) Date of publication and mention of the grant of the patent: **18.02.2026**
(21) Application number: 23725488.3
(22) Date of filing: 25.04.2023
(51) Int. Cl.: A01D 34/00, A01D 34/71, A01D 34/81

(54) **LAWN MOWER AND CUTTING DECK WITH DISCHARGE CHUTE CONTROL SYSTEM**
RASENMÄHER UND MÄHWERK MIT AUSWURFSCHACHTSTEUERUNG
TONDEUSE À GAZON ET PLATEAU DE COUPE AVEC SYSTÈME DE CONTRÔLE DE LA GOULOTTE D'ÉJECTION

(30) Priority: 03.05.2022 US 202263337690 P
(43) Date of publication of application: 12.03.2025
(73) Proprietor: The Toro Company, Bloomington, MN 55420-1196 (US)
(72) Inventor: WADZINSKI, Chris A., Bloomington, Minnesota 55420-1196 (US)
(74) Representative: J A Kemp LLP
(86) International application number: PCT/US2023/019738
(87) International publication number: WO 2023/215130

(56) References cited:
- US-A1- 2017 202 140
- US-B1- 6 874 309
- US-B2- 10 791 672
- US-B2- 10 897 845

## Description

Embodiments of the present disclosure are related to lawn mowers, and more particularly, to cutting decks incorporating a movable grass discharge chute and associated control system.

### BACKGROUND

Riding and walk-behind ground working vehicles such as lawn mowers are used by homeowners and professionals alike. These vehicles typically include a prime mover, e.g., one or more internal combustion engines and/or electric motors, to power not only an implement (e.g., cutting deck) attached to the vehicle, but also a traction drive system, the latter adapted to propel the vehicle over a ground surface.

Lawn mowers may generally include a discharge chute, e.g., side discharge chute, to direct clippings or other debris exiting the cutting deck. While effective at directing debris, the discharge chute may extend laterally in such a way that it interferes with the mower's ability to mow close to an edge of a work area and/or allow the mower to pass through narrow openings such as gates. For example, the discharge chute may hamper the ability to mow a portion of the work area immediately adjacent a building or other obstruction. Moreover, there may be instances in which the operator desires to block the mower's side discharge altogether, e.g., to prevent ejection of clippings into flower beds. US 6 874 309 B1 discloses a lawnmower with displaceable discharge chute and closing plate.

### SUMMARY

Embodiments of the present invention may address these and other issues by providing, in one embodiment, a lawn mower is provided that includes: a cutting deck having a top surface and at least one sidewall that together form a downwardly opening cutting chamber, the at least one sidewall defining a discharge outlet; and a discharge chute coupled to the cutting deck and positioned proximate the discharge outlet, wherein the discharge chute is movable between an inoperative position and an operative position. A blocking plate is coupled to the cutting deck and moveable between an open position, wherein the discharge outlet is unobstructed by the blocking plate, and a closed position, wherein the discharge outlet is obstructed by the blocking plate. A first gear is coupled to the discharge chute and a meshing second gear is coupled to the blocking plate, wherein the first gear rotates about a first axis and the second gear rotates about a second axis parallel to the first axis. The mower also includes an actuator configured to move at least one of the chute and the blocking plate.

The above summary is not intended to describe each embodiment or every implementation. Rather, a more complete understanding of illustrative embodiments will become apparent and appreciated by reference to the following Detailed Description of Exemplary Embodiments and claims in view of the accompanying figures of the drawing.

### BRIEF DESCRIPTION OF THE VIEWS OF THE DRAWING

Exemplary embodiments will be further described with reference to the views of the drawing, wherein:
FIG. 1 is a left front perspective view of a lawn mower in accordance with embodiments of the present disclosure.
FIG. 2 is a right rear perspective view of a lawn mower consistent with the example of FIG. 1 and illustrating an exemplary discharge chute and chute control system of the present disclosure, the chute shown in an operative position.
FIG. 3 is a partial right front perspective view of a lawn mower and discharge chute consistent with the example of FIGS. 1-2.
FIG. 4 is a partial right rear perspective view of a lawn mower and discharge chute consistent with the example of FIGS. 1-2.
FIG. 5 is a right rear perspective view of a lawn mower consistent with the example of FIGS. 1-2 illustrating the discharge chute in an inoperative position, wherein an exemplary blocking plate is visible in a closed position corresponding to the inoperative position of the chute.
FIG. 6 is a front elevation view of a lawn mower consistent with the example of FIG. 5 illustrating the chute in the inoperative position (solid lines) and the operative position (broken lines).
FIG. 7 is a partial rear elevation view of a lawn mower consistent with the example of FIGS. 1-2 showing the discharge chute in the operative position.
FIG. 8 is a partial rear elevation view of the lawn mower consistent with the example of FIG. 7 but illustrating the discharge chute in the inoperative position and the blocking plate in a closed position.
FIG. 9 is a partial section view of the lawn mower taken along line 9-9 of FIG. 2 illustrating the discharge chute in the operative position and the blocking plate in the open position.
FIG. 10 is a partial section view similar to that of FIG. 9 but illustrating the discharge chute in the inoperative position and the blocking plate in the closed position.
FIG. 11 is a bottom plan view of a lawn mower consistent with the example of FIGS. 1-2 and illustrating the discharge chute in an operative position and the blocking plate in an open position.
FIG. 12 is an enlarged section view similar to that of FIG. 9 illustrating the chute in an operative position and the blocking plate in an open position.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### DETAILED DESCRIPTION OF EXEMPLARY EMBODIMENTS

In the following detailed description of illustrative embodiments, reference is made to the accompanying figures of the drawing which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "about." Furthermore, the terms "having," "including," "comprises" and variations thereof do not have a limiting meaning where these terms appear in this description and claims, and the terms "a," "an," "the," "at least one," and "one or more" are used interchangeably herein. The term "and/or" (if used) means one or all of the listed elements or a combination of any two or more of the listed elements. "I.e." is used as an abbreviation for the Latin phrase *id est* and means "that is." "E.g.," is used as an abbreviation for Latin phrase *exempli gratia* and means "for example."

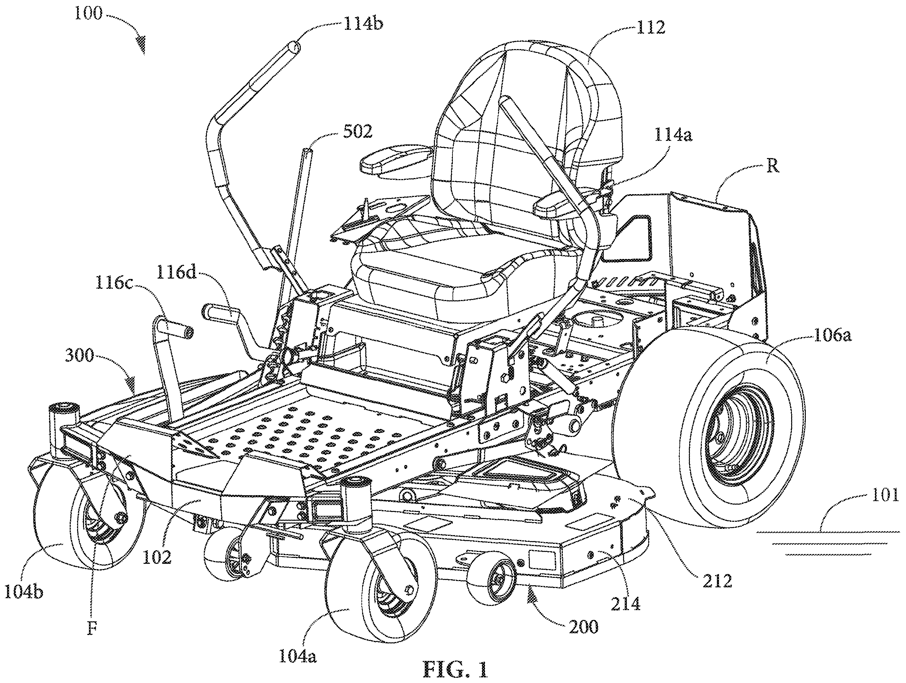

Still further, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective of one operating the mower 100 while the mower is in an operating configuration, e.g., while it is positioned such that ground-engaging members (e.g., wheels) rest upon a generally horizontal ground surface 101 as shown in FIG. 1. These terms are used only to simplify the description, however, and not to limit the interpretation of any embodiment described.

Embodiments described and illustrated herein are directed to lawn mowers incorporating a cutting deck. The deck may define a discharge outlet and include an associated discharge chute control system for controlling one or both of: a discharge chute coupled to the deck and adapted to selectively direct debris ejected from the discharge outlet; and a blocking plate coupled to the deck and adapted to selectively open and close the discharge outlet. For example, the discharge chute may be moveable between an inoperative position and an operative position, while the blocking plate may be moveable between an open position, wherein the discharge outlet is unobstructed by the blocking plate, and a closed position, wherein the discharge outlet is obstructed by the blocking plate. In exemplary embodiments, the discharge chute is operatively connected to the blocking plate such that movement of either the discharge chute or the blocking plate produces corresponding movement of the other of the discharge chute or the blocking plate.

Repositioning the discharge chute and blocking plate can be accomplished manually or automatically. For example, in one or more embodiments, the mower can include various manually powered actuators (e.g., a lever, cable) that can be manipulated by an operator to move the discharge chute and blocking plate as described herein. In other embodiments, the mower can include one or more powered actuators (e.g., electrically, pneumatically, or hydraulically powered actuator) that can be selectively energized (e.g., by the mower operator) to produce movement of the discharge chute and blocking plate. In still other embodiments, the mower may include one or more controllers that automatically control a powered actuator(s) to move the discharge chute and/or the blocking plate. Such automation may be useful, for example, with application to remotely-controlled or autonomous mowers.

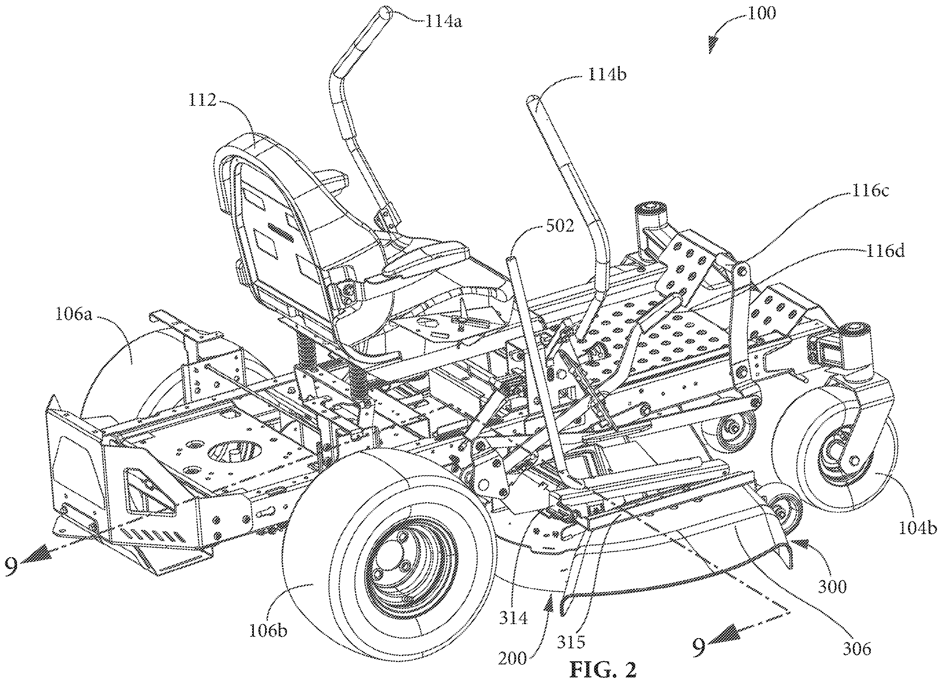

With reference to the figures of the drawing, wherein like reference numerals designate like parts and assemblies throughout the several views, FIG. 1 illustrates a self-propelled vehicle, e.g., a riding lawn mower 100, including a cutting deck 200 (e.g., belly-mounted deck) having a discharge chute 300 (see also FIG. 2). While, for the sake of brevity, embodiments of the disclosure are herein described with reference to a sit-on mower (hereinafter generically referred to simply as a "mower"), those of skill in the art will realize that the concepts described herein are equally applicable to other types of walk-behind and stand-on mowers, as well as to most any other walk-behind, sit-on, stand-on, remotely-controlled, or autonomous ground working vehicle having a ground-engaging implement incorporating a discharge outlet.

It is noted that the reference numeral suffixes "a" and "b" may be used throughout this description to denote various left- and right- side parts/features, respectively. However, in most pertinent respects, the parts/features denoted with "a" and "b" suffixes are substantially identical to, or mirror images of, one another. It is understood that, unless otherwise noted, the description of an individual part/feature (e.g., part/feature identified with an "a" suffix) also applies to the opposing part/feature (e.g., part/feature identified with a "b" suffix). Similarly, the description of a part/feature identified with no suffix may apply, unless noted otherwise, to both the corresponding left and right part/feature.

While not necessarily central to an understanding of exemplary embodiments of the present disclosure, the general construction of the illustrative mower 100 is now briefly described. As shown in FIG. 1, the mower 100 may include a frame or chassis 102 having a front end F and a rear end R, the chassis 102 supporting a power source or prime mover (not shown) such as one or more internal combustion engines and/or one or more electric motors. For example, one engine could power both the cutting deck and a vehicle propulsion system (e.g., the engine could power a hydrostatic pump connected to separate drive wheel motors). In other embodiments, multiple electric motors may be used to separately power the cutting deck (e.g., one motor powering all blade spindles, or a separate motor powering each spindle) and the propulsion system (e.g., one motor powering a single transaxle, or separate motors powering each drive wheel).

A pair of transversely opposing, ground-engaging drive members, e.g., first and second (left and right) rear drive wheels 106 (e.g., a left wheel 106a and a right wheel 106b) as shown in FIG. 2, may be coupled to opposite (left and right) rear sides of the chassis 102 to support the mower 100 upon, and propel the mower 100 relative to, the ground surface 101.

Operator controls may permit independent control of the speed and direction of each drive wheel 106, allowing operator control of mower 100 speed and direction from an operator platform, e.g., an operator seat 112. The operator controls may include drive control levers 114 (e.g., a left drive control lever 114a and a right drive control lever 114b) operable to independently control speed and direction of their respective drive wheels 106 via manipulation of the mower's drive system as is known in the art. While illustrated herein as incorporating separate drive control levers 114, other controls, e.g., single or multiple joysticks or joystick-type levers, steering wheels, etc. may also be used without departing from the scope of this disclosure. The mower 100 may further include various other controls (power take-off (PTO) engagement, ignition, throttle, etc.), as are known in the art. While shown as incorporating various operator controls, such embodiments are not limiting as embodiments of the present disclosure may also be utilized with mowers lacking some or all on-board controls, e.g., mowers intended for remote control operation and/or autonomous operation.

A pair of front ground-engaging members or wheels 104 (e.g., a left caster wheel 104a and a right caster wheel 104b), which may be connected to forwardly extending portions of the chassis 102, may support a front portion of the mower 100 in rolling engagement with the ground surface 101. Although the illustrated mower 100 has the drive wheels 106 towards the rear of the chassis 102 and the caster wheels 104 towards the front, this configuration is not limiting. For example, other embodiments may reverse the location of the wheels, e.g., the drive wheels in front and the driven or undriven wheels in back. Moreover, other configurations may use different wheel configurations altogether, e.g., a tri-wheel configuration or a vehicle having conventionally-steered wheels. Moreover, while illustrated herein as wheels, other ground-engaging members (e.g., tracks, skids, rollers, etc.) are also contemplated.

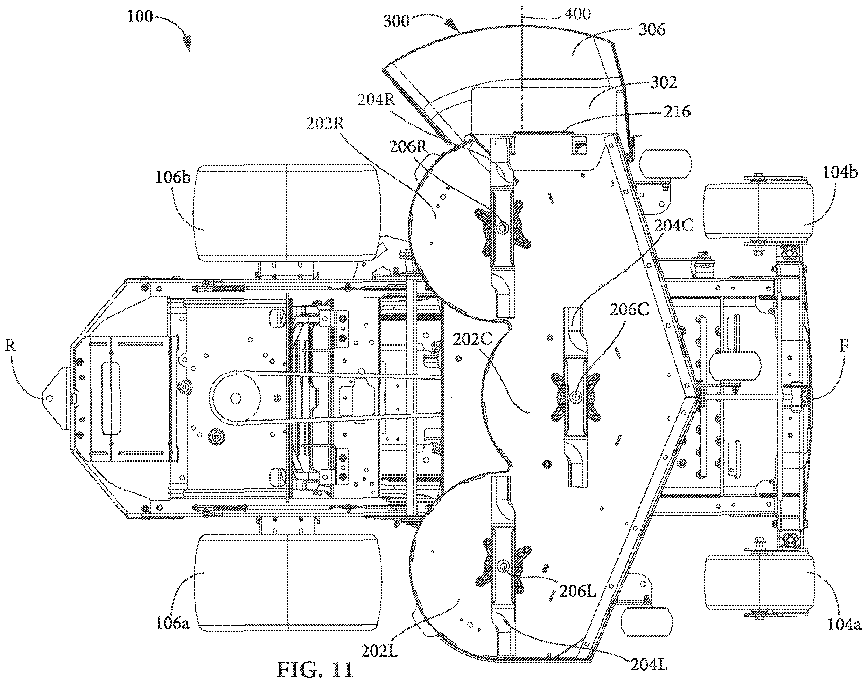

The mower 100 may further include the mower cutting deck 200 mounted to a lower side of the chassis 102, e.g., generally between the drive wheels 106 and the caster wheels 104. The cutting deck 200, which is described in more detail below, may form a deck housing defining at least one downwardly-opening and partially enclosed cutting chamber 202 as shown in FIG. 11. Within each cutting chamber 202 (e.g., a center chamber 202C, a right chamber 202R, and a left chamber 202L) may be one or more rotatable cutting blades 204 (e.g., a center blade 204C, a right blade 204R, and a left blade 204L), each attached to a rotatable blade spindle 206 (e.g., a center spindle 206C, a right spindle 206R, and a left spindle 206L) journaled to the respective deck housing. Once again, while illustrated herein as a belly-mount deck, other mower configurations may, alternatively or in addition, utilize other deck configurations (e.g., an out-front or rear-mounted (e.g., towed) deck, a laterally-mounted deck).

During operation, power may be selectively provided by the prime mover(s) to at least one of the cutting deck 200 (e.g., to the spindles 206) and the drive wheels 106, whereby the cutting blades rotate at a speed sufficient to sever grass and other vegetation as the deck passes over the ground surface 101. Typically, the mower 100 includes an operator-selectable height-of-cut control system 116 (e.g., a deck lift pedal 116c and a deck position lever 116d, see FIG. 1) to allow deck height adjustment relative to the ground surface 101.

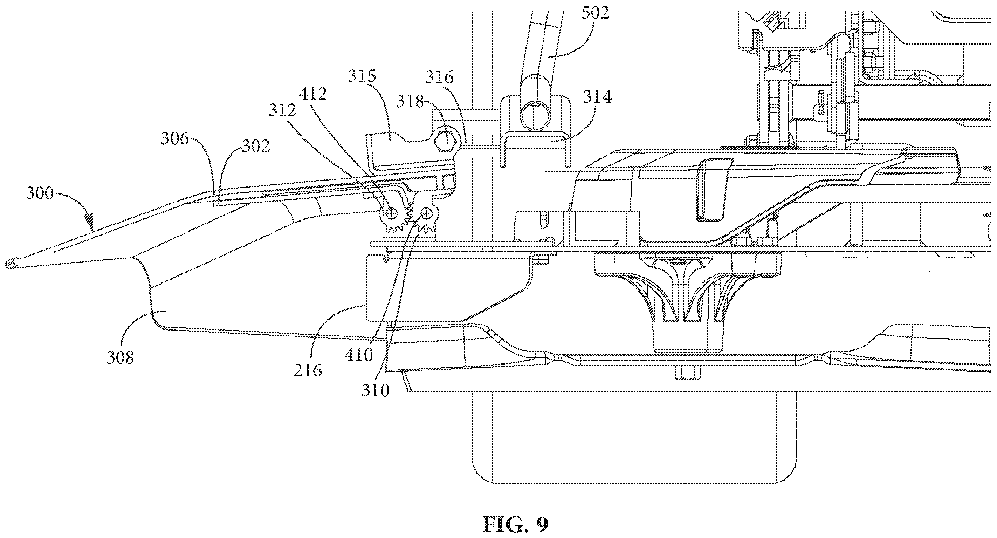

As illustrated in FIG. 1, the cutting deck 200 may include a top surface 212 and at least one sidewall 214 extending downwardly therefrom, where the top surface 212 and the at least one sidewall 214 together form the cutting chamber(s) 202 that open in a downwardly-facing direction (e.g., towards the ground surface 101 during operation). The at least one sidewall 214 may wrap around a perimeter of the top surface 212 such that the at least one sidewall 214 surrounds the cutting chamber(s) 202. In some embodiments, the at least one sidewall 214 defines a discharge outlet 216 (as illustrated in FIGS. 9 and 11). The discharge outlet 216 may be positioned such that grass clippings and other debris may be ejected in a certain direction from the cutting chamber(s) 202 during mower operation. While the position of the discharge outlet 216 may be at most any location along the sidewall(s) (e.g., along a left side of the deck or along a rear side of the deck, etc.), it may in some embodiments be positioned along the right side of the deck as shown in FIG. 2.

The discharge outlet 216 may define a window through the at least one sidewall 214 of most any size that effectively permits the desired flow of debris (e.g., grass clippings) through the discharge outlet. As indicated above, other mowers 100 may locate the cutting deck 200 and the discharge outlet 216 at other locations relative to the chassis 102 (e.g., a forwardly-mounted or "out-front" deck, towed deck, or laterally-mounted deck).

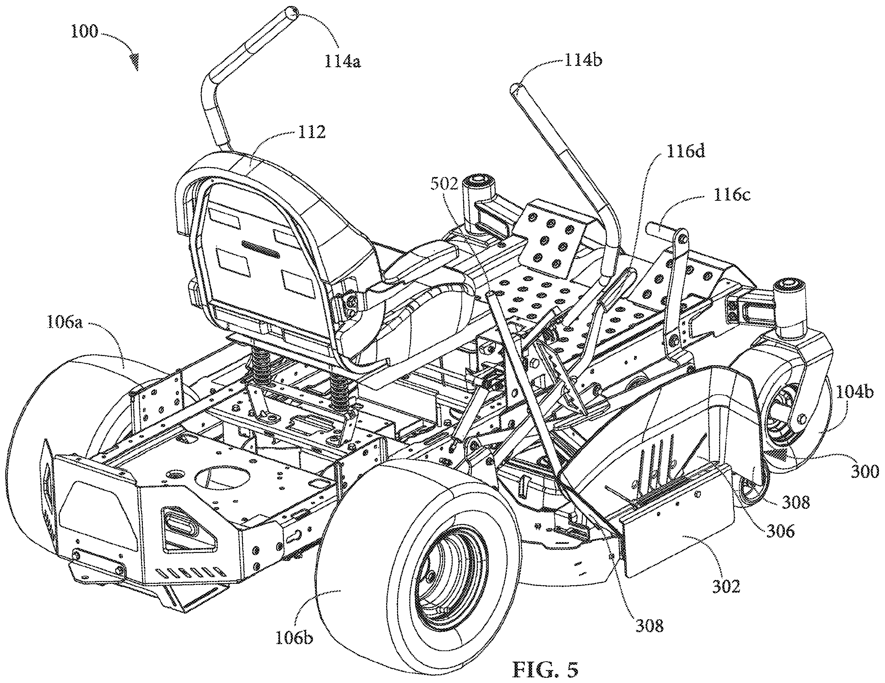

With this general overview of an exemplary mower and cutting deck, discharge chute systems in accordance with embodiments of the present disclosure are now described with initial reference to FIGS. 2 and 5. As shown in FIG. 2, the discharge chute ("chute") 300, may be coupled to the cutting deck 200 such that the chute 300 may effectively guide ejected debris during cutting deck operation when the chute is in the operative position as shown in FIG. 2. As further described below, the chute 300 may be moved between at least this operative position as shown in FIG. 2 and the inoperative position as shown in FIG. 5. When the chute 300 is in the operative position, the chute 300 may be connected or joined to the discharge outlet 216 to effectively guide debris exiting the discharge outlet 216, while in the inoperative position, the chute may be disconnected or disjoined from the discharge outlet 216.

To permit chute motion relative to the deck, the chute 300 may be coupled to the cutting deck 200 using any most means known in the art (e.g., bolts, hinges, pins, slides, etc.) that permits the desired motion. While the shape of the chute 300 may vary, it may in some embodiments form an inverted (downwardly-opening) generally U-shaped channel adapted to guide debris ejected through the discharge outlet 216 (see FIG. 11) from the cutting chamber(s) 202.

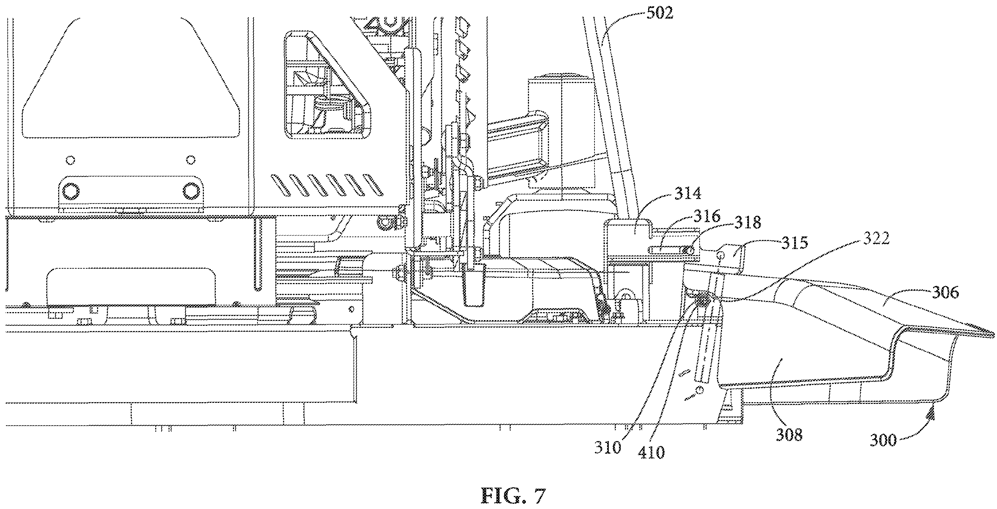

The chute 300 may be of most any suitable shape that effectively guides grass clipping and other debris out from beneath mower 100, e.g., out from the cutting chamber(s) of the cutting deck 200. As illustrated in FIG. 7, the chute 300 may, in some embodiments, slope downwardly and away from the cutting deck when the chute 300 is in the operative position. Moreover, in the operative position, the chute 300 may be suspended above the ground surface 101 so that it does not drag along the ground surface during mower operation. As stated above, the chute 300 may be generally U-shaped having a chute top wall 306 and at least one (e.g., two) chute sidewall 308. The chute top wall 306 and the chute sidewalls 308 may abut, or may otherwise be positioned close to, the sidewall 214 (around the discharge outlet 216) when the chute is in the operative position.

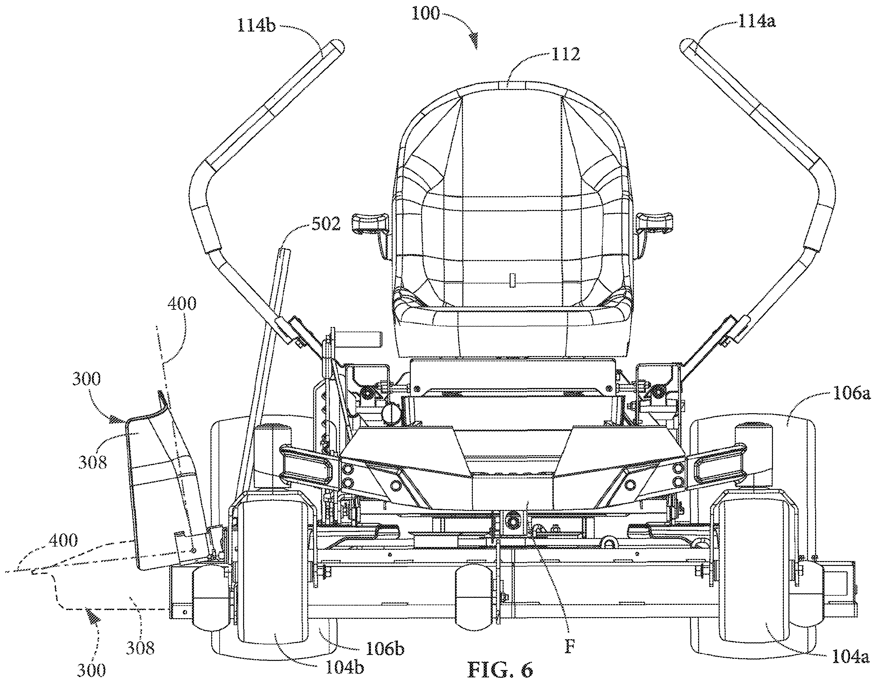

The chute 300 may extend generally along a chute axis 400 as illustrated in FIGS. 6 and 11. As used herein, "chute axis 400" may refer to an axis that extends from an inner end of the chute 300 (proximate the sidewall 214) to an opposite (distal or outer end) of the chute 300 (distal to the at least one sidewall 214). In the illustrated embodiments, the chute 300 is pivotally coupled to the cutting deck 200 (e.g., above and proximate the discharge outlet 216) about a first axis 410 as shown in FIG. 9. As a result, as the chute 300 is pivoted from the operative position (broken line rendering in FIG. 6) to the inoperative position (solid line rendering in FIG. 6), the chute axis 400 moves between the two positions illustrated. While not wishing to be bound to a specific chute axis, it may in some embodiments be described as extending orthogonal to the first axis 410.

As shown in FIG. 6, when the chute 300 is in the operative position, the chute 300 (e.g., the chute axis 400) could extend in a generally horizontal direction (parallel with the ground surface 101). However, in other embodiments, the operative position may not be horizontal, but may instead extend at a downward (or, alternatively, upward) angle relative to horizontal (e.g., up to +/- 45 degrees from horizontal, or up to +/- 15 degrees from horizontal).

As stated above, when the chute 300 is in the inoperative position, it is not intended to guide debris exiting the discharge outlet 216, but rather is positioned to reduce interference with surrounding obstacles. For instance, in the inoperative position, the chute 300 (e.g., the chute axis 400) may be positioned such that it extends generally orthogonally with respect to the ground surface 101. In other exemplary embodiments, however, the chute/chute axis may extend upwardly at a non-orthogonal angle from the ground surface 101 when in the inoperative position. Regardless, the inoperative position may allow the chute 300 to avoid contact with obstacles that the chute 300 may otherwise encounter if in the operative position. Exemplary non-orthogonal angles of the chute axis 400 (when the chute is in the inoperative position) may be any angle up to 180 degrees from the operative position (e.g., folded over onto the top surface 212 of the deck). In other embodiments, the chute axis 400 may form an angle of between 75 degrees and 105 degrees from horizontal when in the inoperative position.

As shown in FIG. 5, a blocking plate 302 may also be coupled (e.g., pivotally coupled) to the cutting deck 200 using any pivotal means known in the art (e.g., bolts, hinges, pins, etc.). In the illustrated, embodiments, the blocking plate 302 may be coupled to the cutting deck 200 (e.g., to the top surface 212 or sidewall 214) proximate the discharge outlet 216 such that the blocking plate 302 is able to selectively block the discharge outlet 216 when in a closed position as shown in FIG. 5, and permit passage of debris when in an open position as shown in FIG. 9.

As shown in FIG. 5, when the chute 300 is in the inoperative position, the blocking plate 302 may be in the closed position such that the blocking plate 302 obstructs, blocks, or otherwise occludes the discharge outlet 216. Conversely, when the chute 300 is in the operative position shown in FIG. 9, the blocking plate 302 may be in the open position such that the blocking plate 302 does not block the discharge outlet 216, permitting debris to freely exit the discharge outlet 216 via the chute 300.

As further shown in FIG. 9, when in the open position, the blocking plate 302 may extend outwardly beyond the at least one sidewall. For example, as discussed above with respect to the chute 300, the blocking plate 302 may extend in a generally horizontal direction (parallel with the ground surface 101) when the blocking plate 302 is in the open position and may extend generally orthogonally to the ground surface 101 when in the closed position. However, in other embodiments, the open position may instead extend at an angle downwards or upwards relative to horizontal (e.g., up to +/- 45 degrees from horizontal, or up to +/- 15 degrees from horizontal). When in the closed position, the blocking plate 302 may be at most any angle relative to horizontal that permits the blocking plate to effectively block the discharge outlet. While shown as being generally planar, the blocking plate may be of most any shape (e.g., curved) that suitably blocks the discharge outlet when in the closed position.

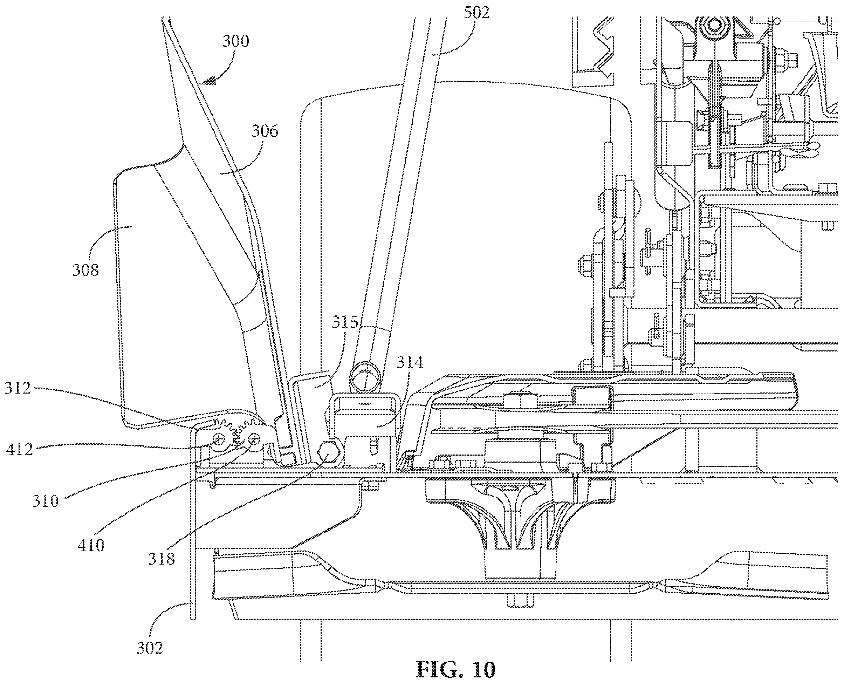

As stated above, the chute 300 may be pivotally coupled to the cutting deck 200 about the first axis 410 as shown in FIGS. 9 and 10. Similarly, the blocking plate 302 may be pivotally coupled to the cutting deck 200 about a second axis 412 that is offset from and parallel to the first axis 410. In the illustrated embodiments, the first axis 410 and the second axis 412 may be generally transverse to the chute axis 400, and they may be parallel to the ground surface 101.

As shown in FIGS. 9-10 the chute 300 and the blocking plate 302 may include a first gear 310 and a second gear 312, respectively, wherein the first gear is adapted to rotate about the first axis 410 and the second gear is adapted to rotate about the second axis 412. That is to say, the first gear 310 may be operatively coupled to the discharge chute 300 (e.g., be integrally formed with or otherwise attached to the chute), while the second gear 312 is operatively coupled to the blocking plate 302 such that each gear moves in direct relation with its attached component. Moreover, the first gear 310 and the second gear 312 may mesh with one another such that rotation of one gear produces corresponding rotation in the other, and *vice versa.* Stated alternatively, as either one of the chute 300 or the blocking plate 302 moves, corresponding movement of the other will result due to the meshing of the first gear 310 and the second gear 312 as further described below. Accordingly, the chute 300 may be characterized as being operatively connected to the blocking plate 302 such that movement of one causes movement of the other.

In illustrated embodiments, the first gear 310 and the second gear 312 have identical constructions (pitch diameters) such that the chute 300 and the blocking plate 302 rotate in a 1:1 ratio (e.g., if the chute 300/first gear 310 moves 90 degrees, the blocking plate 302/second gear 312 also move 90 degrees). In alternative embodiments, the two gears may have different geometries to allow a different angular rotations of either the chute or the blocking plate relative to the other.

In the illustrated embodiments, the first gear 310 and the second gear 312 may have an elongate shape. Such a gear configuration may allow reduced pressure on the gear teeth, allowing the gears to be constructed of inexpensive materials such as injection molded plastic or extruded aluminum. However, such an elongate structure is exemplary only as more convention gears are certainly possible without departing from the scope of this disclosure.

Movement of the chute 300 and the blocking plate 302 may be initiated and controlled manually. For example, a user may directly or manually move the chute 300 between the operative and the inoperative positions (or, alternatively, the blocking plate 302 between the open and closed positions), thus causing the blocking plate 302 to move between the open and closed positions (or, if the blocking plate 302 is moved, causing the chute 300 to move between the operative and inoperative positions). However, in other embodiments, the mower 100 may include an actuator connected to the chute 300 and/or blocking plate 302, whereby the actuator may, upon operator manipulation, cause movement of at least one of the chute 300 and the blocking plate 302.

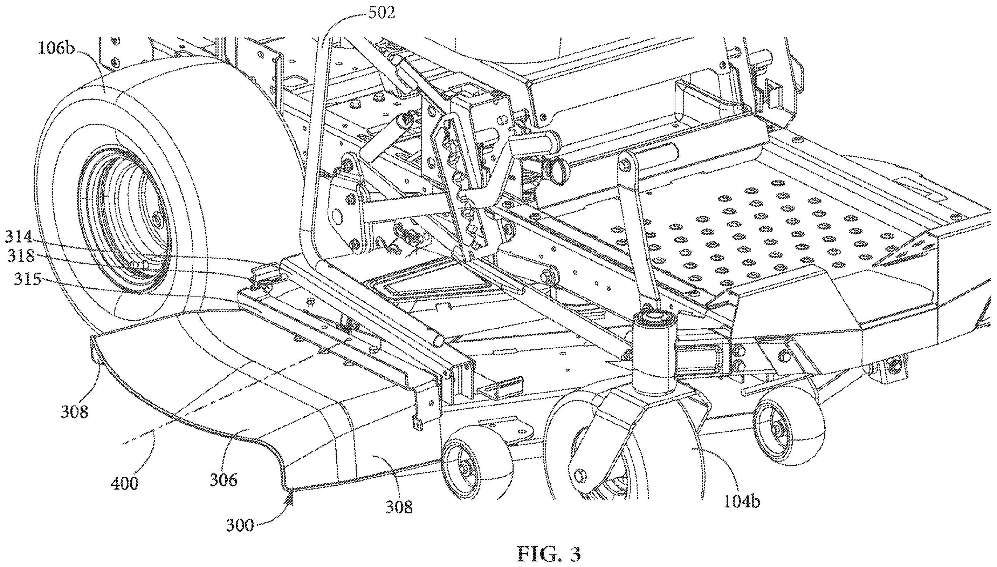

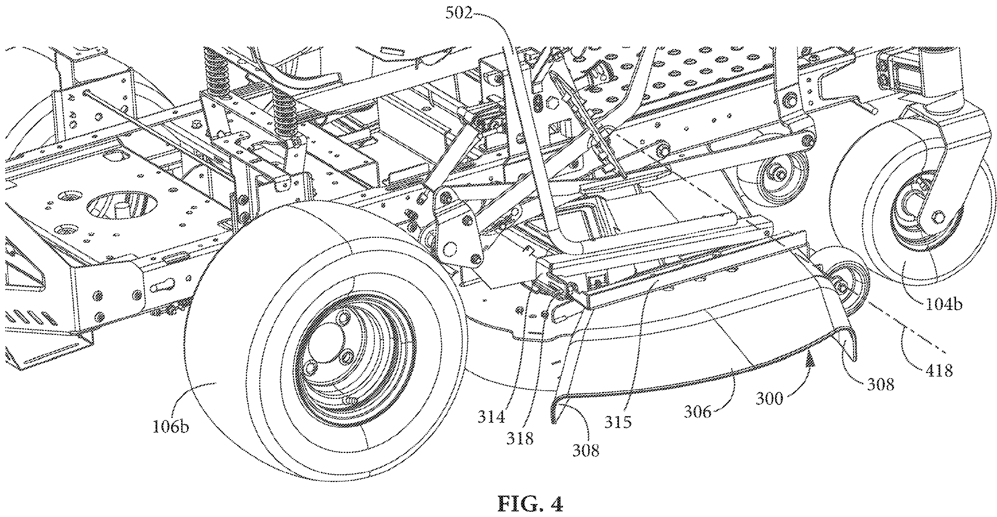

As illustrated in FIGS. 2-4, the actuator may include a pivot arm 314, a handle 502 attached to the pivot arm, and a pin 318 affixed to the chute 300, e.g., via a bracket 315. As further illustrated in FIGS. 7, 8, and 12, the pivot arm 314 may define a slot 316. The pivot arm may be pivotally coupled to the cutting deck 200 (e.g., to the top surface 212) such that it may pivot relative to the cutting deck about a third axis 418 (see FIG. 4). While not wishing to be bound to any specific orientation, the third axis 418 may be oriented orthogonal to a direction of the first axis 410 and/or the second axis 412.

The pivot arm 314/handle 502 may be moveable between a first position and a second position. The first position of the pivot arm 314 may correspond to the chute 300 being in the operative position and the blocking plate 302 being in the open position (see, for example, FIGS. 2, 4, 7, and 9). The second position of the pivot arm 314/handle 502 may correspond to the chute 300 being in the inoperative position and the blocking plate 302 being in the closed position (see, e.g., FIGS. 5, 8, and 10).

The slot 316 of the pivot arm 314 may be configured to receive the pin 318. As stated above, the pin may be fixed to the bracket 315 which is, in turn, fastened or attached to (or alternatively, integrally formed as part of) the chute 300. The pin 318 may move freely within the slot between the slot ends. As shown in FIG. 9, the pin 318 may be offset from the first axis 410 such that movement of the pin may produce movement of the chute 300 about the first axis.

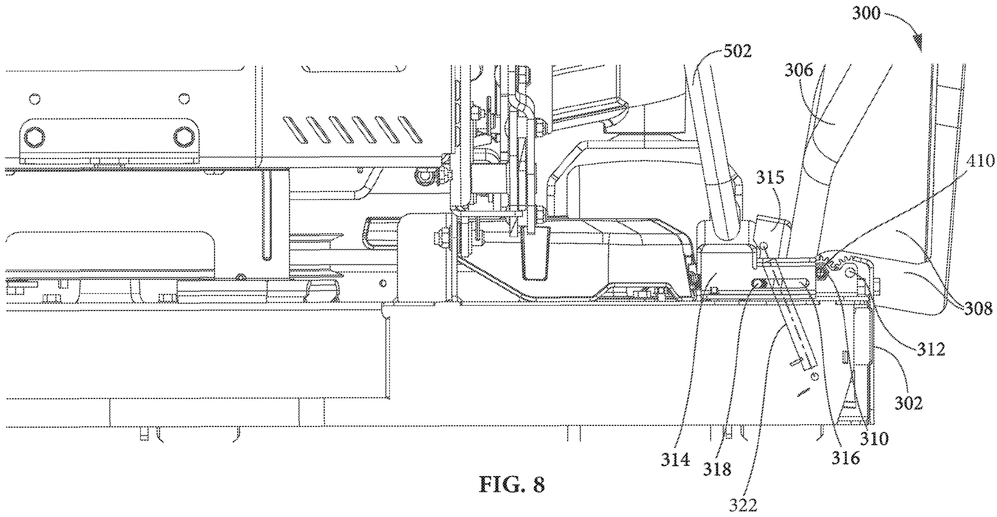

During operation, the operator may manipulate the handle 502/pivot arm 314 by pivoting the handle 502 from the first position (see FIG. 7) to the second position (see FIG. 8). As the handle 502 and pivot arm 314 pivot about the third axis 418 (see FIG. 4), the slot 316 moves downwardly. As the slot 316 moves, the pin 318 will translate along the slot 316 from the position shown in FIG. 7 to the position shown in FIG. 8. As the pin 318 is attached to the bracket 315, such movement of the pin causes desired rotation of the chute 300 from the operative to the inoperative position.

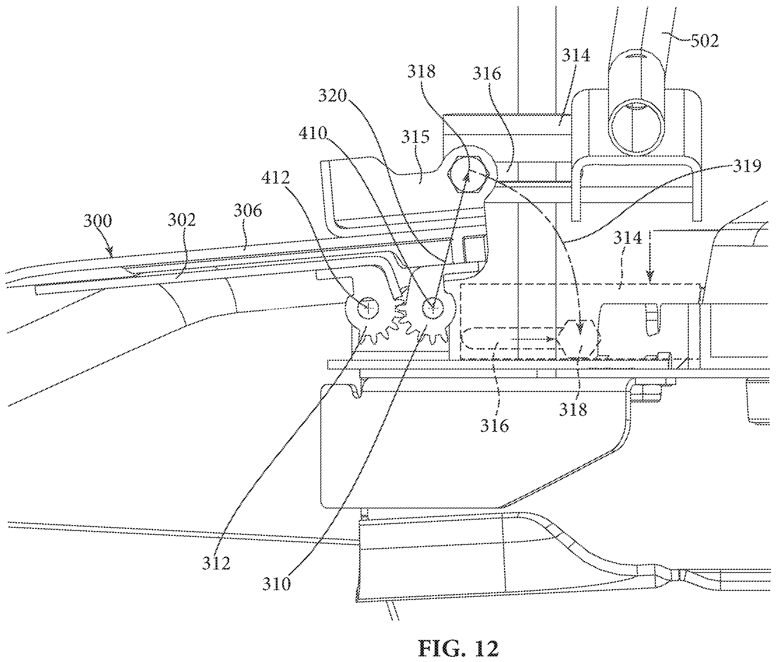

This motion is further depicted in FIG. 12, wherein the pivot arm 314, slot 316, and pin 318 are shown in solid lines for the first position of the handle, and in broken lines for the second position of the handle. As is evident in this view, as the pivot arm 314 pivots about the third axis 418 (see FIG. 4), the pivot arm 314, the pin 318, and the slot 316 move between the solid line position and the broken line position. That is to say, pivotal movement of the pivot arm causes the slot to move downwardly as shown. As the pin 318 (connected to the chute 300) is constrained to move only within the slot 316, the pin 318 moves through an arc of motion 319 about the first axis 410 (due to the pin being spaced from the first axis by a distance 320). Such movement causes the first gear 310 to rotate and accordingly the chute to move from the operative to the inoperative positions. Moreover, as the first gear 310 meshes with the second gear 312 of the blocking plate 302, the blocking plate also moves to the closed position as a result of the movement of the pin 318.

As shown in FIGS. 7 and 8, the chute control system may include one or more biasing members, e.g., extension springs, that assist in biasing the chute and/or the blocking plate toward one or both of their respective positions. For example, an extension spring 322 may have a first end coupled to a sidewall of the cutting deck 200 (as illustrated in FIGS. 1 and 2) and a second end coupled to the bracket 315 as shown. When the chute 300 is in the operative position as shown in FIG. 7, the spring 322 biases the chute in the clockwise direction (as viewed in FIG. 7) about the first axis 410, thereby biasing the chute to its operative position (and thus the blocking plate to its open position). However, as shown in FIG. 8, when the chute 300 is in the inoperative position, the spring 322 may apply a force to the chute in the counterclockwise direction (as viewed in FIG. 8) about the first axis 410, thereby biasing the chute to its inoperative position (and thus the blocking plate to its closed position). That is to say, the spring 322 may connect to the chute (e.g., to the bracket 315) such that its over-center movement (relative to the first axis 410), allows it to bias or hold the chute in both positions. While illustrated as a single spring connected to the bracket 315, such an embodiment is exemplary only as other biasing devices, and other attachment configurations, are certainly possible.

While described as moving the handle back and down to initiate chute/blocking plate movement, such a construction is exemplary only. In other embodiments, the handle may be configured to move in the reverse direction to effectuate such movement, move side-to-side, rotate, translate, or move in most any other manner that causes the desired slot movement. In other embodiments, chute motion may occur with other actuators controlled by the operator's hand or foot.

In exemplary embodiments described above, movement of the chute 300 and the blocking plate 302 may be initiated and controlled by manual actuation. In other embodiments, other actuators may be provided to initiate and control movement of at least one of the chute 300 and the blocking plate 302. For example, the actuator may be configured as a cable and/or a link or linkages operatively connected to the chute 300 or the blocking plate 302. In still other embodiments, the actuator may be a powered actuator, e.g., a pneumatic, hydraulic, or electrical actuator, solenoid, or motor capable of producing linear or rotational output. Such actuator may be controlled by an operator input (e.g., switch, button, pedal, valve, or the like).

In yet other embodiments, the mower 100 may also include an electronic controller, whereby the controller may control the powered actuator. As with the powered actuators described above, the controller may be coupled to the operator input (e.g., switch, button, pedal, valve, or the like) used to energize the actuator.

In still other embodiments, movement of the chute 300 and the blocking plate 302 may be initiated and controlled automatically without user input. For example, the mower 100 may include a sensor or sensors, such as one or more cameras, or one or more motion sensors. Such sensors may sense an object in the path of the mower 100 (or in the path of the chute 300) and send a signal or signals to the controller. The controller may then energize the actuator to initiate or control movement of the chute 300 and the blocking plate 302 in response to the sensor signal(s). Such a configuration may be suitable for autonomous mowing operations.

## Claims

1. A lawn mower (100) comprising:
a cutting deck (200) comprising a top surface (212) and at least one sidewall (214) that together form a downwardly opening cutting chamber (202), the at least one sidewall defining a discharge outlet (216);
a discharge chute (300) coupled to the cutting deck and positioned proximate the discharge outlet, wherein the discharge chute is movable between an inoperative position and an operative position;
a blocking plate (302) also coupled to the cutting deck and moveable between an open position, wherein the discharge outlet is unobstructed by the blocking plate, and a closed position, wherein the discharge outlet is obstructed by the blocking plate; an actuator configured to move at least one of the chute and the blocking plate;
the lawn mower being **characterised by** further comprising:
a first gear (310) coupled to the discharge chute and a meshing second gear (312) coupled to the blocking plate, wherein the first gear rotates about a first axis (410) and the second gear rotates about a second axis (412) parallel to the first axis.

2. The lawn mower (100) of claim 1, wherein the actuator comprises:
a pivot arm (314) coupled to the cutting deck (200) and configured for movement relative thereto, the pivot arm defining a slot (316) configured to receive a pin (318) associated with the discharge chute (300), the pin offset from the first axis (410).

3. The lawn mower (100) of claim 2, wherein the pivot arm (314) is pivotally coupled to the cutting deck (200) for pivoting about a third axis (418), the third axis oriented orthogonal to a direction of the first axis (410).

4. The lawn mower (100) of claims 2 or 3, wherein the actuator further comprises a handle (502) operatively connected to the pivot arm (314).

5. The lawn mower (100) of any one of the preceding claims, wherein the discharge chute (300), when in the operative position, is joined to the discharge outlet (216) to effectively guide debris exiting the discharge outlet, and when in the inoperative position, is disjoined from the discharge outlet.

6. The lawn mower (100) of any one of the preceding claims, wherein the discharge chute (300) defines a chute axis (400), wherein the chute axis extends: in a first direction when the discharge chute is in the operative position; and in a second direction when the discharge chute is in the inoperative position.

7. The lawn mower (100) of any one of the preceding claims, wherein the blocking plate is coupled to the cutting deck proximate the discharge outlet.

8. The lawn mower (100) of any one of the preceding claims, wherein the actuator is a pneumatically, hydraulically, or electrically powered actuator configured to be selectively energized to move at least one of the discharge chute (300) and blocking plate (302).

9. The lawn mower (100) of claim 8, further comprising a controller configured to control the actuator.

10. The lawn mower (100) of claim 9, further comprising at least one sensor configured to send a signal to the controller, wherein the controller is further configured to automatically control the actuator in response to the signal received from the at least one sensor.

11. The lawn mower (100) of any one of claims 1-7, wherein the actuator is a manually powered actuator comprising a cable and/or a link or linkages operatively connected to the discharge chute (300) or the blocking plate (302).

12. The lawn mower (100) of any one of the preceding claims, further comprising one or more biasing members (322) configured to bias the discharge chute (300) and/or blocking plate (302) toward one or both of their respective positions.

13. The lawn mower (100) of any one of the preceding claims, wherein the first gear (310) and/or the meshing second gear (312) have an elongate shape.

14. The lawn mower (100) of any one of the preceding claims, wherein the first gear (310) and the meshing second gear (312) have the same pitch diameter.

15. The lawn mower (100) of any one of the preceding claims, wherein the blocking plate (302) extends outwardly beyond the at least one sidewall (214) when in the open position.

## Patentansprüche

1. Rasenmäher (100), umfassend:
ein Schneiddeck (200) mit einer oberen Fläche (212) und mindestens einer Seitenwand (214), die zusammen eine sich nach unten öffnende Schneidkammer (202) bilden, wobei die mindestens eine Seitenwand einen Auswurfauslass (216) definiert;
einen Auswurfschacht (300), der mit dem Schneiddeck gekoppelt und in der Nähe des Auswurfauslasses angeordnet ist, wobei der Auswurfschacht zwischen einer Ruheposition und einer Betriebsposition beweglich ist;
eine Sperrplatte (302), die ebenfalls mit dem Schneiddeck gekoppelt ist und bewegbar ist zwischen einer offenen Position, in der der Auswurfauslass durch die Sperrplatte nicht versperrt wird, und einer geschlossenen Position, in der der Auswurfauslass durch die Sperrplatte versperrt ist; einen Aktuator, der so konfiguriert ist, dass er zumindest den Schacht oder die Sperrplatte bewegt;
wobei der Rasenmäher **dadurch gekennzeichnet ist, dass** er ferner umfasst:
ein erstes Zahnrad (310), das mit dem Auswurfschacht gekoppelt ist, und ein kämmendes zweites Zahnrad (312), das mit der Sperrplatte gekoppelt ist, wobei das erste Zahnrad sich um eine erste Achse (410) dreht und das zweite Zahnrad sich um eine zweite Achse (412) parallel zur ersten Achse dreht.

2. Rasenmäher (100) nach Anspruch 1, wobei der Aktuator umfasst:
einen Schwenkarm (314), der mit dem Schneiddeck (200) gekoppelt und für eine Bewegung relativ dafür konfiguriert ist, wobei der Schwenkarm einen Schlitz (316) definiert, der dafür konfiguriert ist, einen Stift (318) aufzunehmen, der dem Auswurfschacht (300) zugeordnet ist, wobei der Stift von der ersten Achse (410) versetzt ist.

3. Rasenmäher (100) nach Anspruch 2, wobei der Schwenkarm (314) schwenkbar mit dem Schneiddeck (200) verbunden ist, um um eine dritte Achse (418) zu schwenken, wobei die dritte Achse orthogonal zu einer Richtung der ersten Achse (410) ausgerichtet ist.

4. Rasenmäher (100) nach Anspruch 2 oder 3, wobei der Aktuator ferner einen Griff (502) umfasst, der mit dem Schwenkarm (314) in Wirkverbindung steht.

5. Rasenmäher (100) nach einem der vorhergehenden Ansprüche, wobei der Auswurfschacht (300) in der Betriebsposition mit dem Auswurfauslass (216) verbunden ist, um den aus dem Auswurfauslass austretenden Auswurf effektiv zu leiten, und in der Ruheposition vom Auswurfauslass getrennt ist.

6. Rasenmäher (100) nach einem der vorhergehenden Ansprüche, wobei die Auswurfschacht (300) eine Schachtachse (400) definiert, wobei sich die Schachtachse in eine erste Richtung erstreckt, wenn sich der Auswurfschacht in der Betriebsposition befindet, und sich in eine zweite Richtung erstreckt, wenn sich der Auswurfschacht in der Ruheposition befindet.

7. Rasenmäher (100) nach einem der vorhergehenden Ansprüche, wobei die Sperrplatte mit dem Schneiddeck in der Nähe des Auswurfauslasses verbunden ist.

8. Rasenmäher (100) nach einem der vorhergehenden Ansprüche, wobei der Aktuator ein pneumatisch, hydraulisch oder elektrisch angetriebener Aktuator ist, der so konfiguriert ist, dass er selektiv erregt wird, um mindestens eine der Komponenten Auswurfschacht (300) und Sperrplatte (302) zu bewegen.

9. Rasenmäher (100) nach Anspruch 8, der ferner eine Steuereinheit umfasst, die so konfiguriert ist, dass sie den Aktuator steuert.

10. Rasenmäher (100) nach Anspruch 9, der ferner mindestens einen Sensor umfasst, der so konfiguriert ist, dass er ein Signal an die Steuereinheit sendet, wobei die Steuereinheit ferner so konfiguriert ist, dass sie den Aktuator als Reaktion auf das von dem mindestens einen Sensor empfangene Signal automatisch steuert.

11. Rasenmäher (100) nach einem der Ansprüche 1 bis 7, wobei der Aktuator ein manuell angetriebener Aktuator ist, der ein Kabel und/oder eine Verknüpfung oder Verbindungen umfasst, die funktionell mit dem Auswurfschacht (300) oder der Sperrplatte (302) verbunden sind.

12. Rasenmäher (100) nach einem der vorhergehenden Ansprüche, der ferner ein oder mehrere Vorspannelemente (322) umfasst, die so konfiguriert sind, dass sie den Auswurfschacht (300) und/oder die Sperrplatte (302) in eine oder beide ihrer jeweiligen Positionen vorspannen.

13. Rasenmäher (100) nach einem der vorhergehenden Ansprüche, wobei das erste Zahnrad (310) und/oder das kämmende zweite Zahnrad (312) eine längliche Form aufweisen.

14. Rasenmäher (100) nach einem der vorhergehenden Ansprüche, wobei das erste Zahnrad (310) und das kämmende zweite Zahnrad (312) den gleichen Teilungsdurchmesser aufweisen.

15. Rasenmäher (100) nach einem der vorhergehenden Ansprüche, wobei sich die Sperrplatte (302) in der offenen Position über die mindestens eine Seitenwand (214) hinaus nach außen erstreckt.

## Revendications

1. Tondeuse à gazon (100) comprenant :
un plateau de coupe (200) comprenant une surface supérieure (212) et au moins une paroi latérale (214) qui, conjointement, forment une chambre de coupe (202) s'ouvrant vers le bas, l'au moins une paroi latérale définissant une sortie d'évacuation (216),
une goulotte d'évacuation (300) couplée au plateau de coupe et positionnée à proximité de la sortie d'évacuation, la goulotte d'évacuation pouvant être déplacée entre une position non opérationnelle et une position opérationnelle,
une plaque de blocage (302) également couplée au plateau de coupe et pouvant être déplacée entre une position ouverte dans laquelle la sortie d'évacuations n'est pas obturée par la plaque de blocage et une position fermée dans laquelle la sortie d'évacuation est obturée par la plaque de blocage,
un actionneur conçu pour déplacer la goulotte et/ou la plaque de blocage,
la tondeuse à gazon étant **caractérisée en ce qu'**elle comprend en outre :
un premier élément denté (310) couplé à la goulotte d'évacuation et un deuxième élément denté (312) engrené couplé à la plaque de blocage, le premier élément denté tournant sur un premier axe (410) et le deuxième élément denté tournant sur un deuxième axe (412) parallèle au premier axe.

2. Tondeuse à gazon (100) selon la revendication 1, dans laquelle l'actionneur comprend :
un bras pivotant (314) couplé au plateau de coupe (200) et conçu pour être mobile par rapport à celui-ci, le bras pivotant définissant une fente (316) conçue pour recevoir une goupille (318) associée à la goulotte d'évacuation (300), la goupille étant décalée par rapport au premier axe (410).

3. Tondeuse à gazon (100) selon la revendication 2, dans laquelle le bras pivotant (314) est couplé de manière pivotante au plateau de coupe (200) pour pivoter sur un troisième axe (418), le troisième axe étant orienté orthogonalement à une direction du premier axe (410).

4. Tondeuse à gazon (100) selon les revendications 2 ou 3, dans laquelle l'actionneur comprend en outre une poignée (502) reliée de manière opérationnelle au bras pivotant (314).

5. Tondeuse à gazon (100) selon l'une quelconque des revendications précédentes, dans laquelle la goulotte d'évacuation (300), lorsqu'elle est en position opérationnelle, est reliée à la sortie d'évacuation (216) pour guider efficacement des débris sortant de la sortie d'évacuation, et lorsqu'elle est en position non opérationnelle, est séparée de la sortie d'évacuation.

6. Tondeuse à gazon (100) selon l'une quelconque des revendications précédentes, dans laquelle la goulotte d'évacuation (300) définit un axe de goulotte (400), l'axe de goulotte s'étendant : dans une première direction lorsque la goulotte d'évacuation est en position opérationnelle ; et dans une deuxième direction lorsque la goulotte d'évacuation est en position non opérationnelle.

7. Tondeuse à gazon (100) selon l'une quelconque des revendications précédentes, dans laquelle la plaque de blocage est couplée au plateau de coupe à proximité de la sortie d'évacuation.

8. Tondeuse à gazon (100) selon l'une quelconque des revendications précédentes, dans laquelle l'actionneur est un actionneur pneumatique, hydraulique ou électrique conçu pour être activé de manière sélective afin de déplacer la goulotte d'évacuation (300) et/ou la plaque de blocage (302).

9. Tondeuse à gazon (100) selon la revendication 8, comprenant en outre un dispositif de commande conçu pour commander l'actionneur.

10. Tondeuse à gazon (100) selon la revendication 9, comprenant en outre au moins un capteur conçu pour envoyer un signal au dispositif de commande, le dispositif de commande étant en outre conçu pour commander automatiquement l'actionneur en réponse au signal reçu en provenance de l'au moins un capteur.

11. Tondeuse à gazon (100) selon l'une quelconque des revendications 1 à 7, dans laquelle l'actionneur est un actionneur manuel comprenant un câble et/ou une biellette ou une tringlerie reliés de manière opérationnelle à la goulotte d'évacuation (300) ou à la plaque de blocage (302).

12. Tondeuse à gazon (100) selon l'une quelconque des revendications précédentes, comprenant en outre un ou plusieurs éléments de sollicitation (322) conçus pour solliciter la goulotte d'évacuation (300) et/ou la plaque de blocage (302) vers une ou leurs deux positions respectives.

13. Tondeuse à gazon (100) selon l'une quelconque des revendications précédentes, dans laquelle le premier élément denté (310) et/ou le deuxième élément denté (312) engrené présentent une forme allongée.

14. Tondeuse à gazon (100) selon l'une quelconque des revendications précédentes, dans laquelle le premier élément denté (310) et le deuxième élément denté (312) engrené présentent le même diamètre primitif.

15. Tondeuse à gazon (100) selon l'une quelconque des revendications précédentes, dans laquelle la plaque de blocage (302) s'étend vers l'extérieur au-delà de l'au moins une paroi latérale (214) lorsqu'elle est en position ouverte.
